# EUROPÄISCHE PATENTANMELDUNG

(11) **EP 2 987 612 A1**
(43) Veröffentlichungstag der Anmeldung: **24.02.2016**
(21) Anmeldenummer: 14181662.9
(22) Anmeldetag: 20.08.2014
(51) Int. Cl.: B29C 49/46, B29C 49/58

(54) **Formfüllmaschine und Formfüllverfahren für einen Kunststoffbehälter**

(71) Anmelder: Krones AG, 93073 Neutraubling (DE)
(72) Erfinder: Engelhard, Patrick, 93073 Neutraubling (DE)
(74) Vertreter: Grünecker Patent- und Rechtsanwälte PartG mbB

(57) **Zusammenfassung**

Formfüllmaschine (1) zum Ausformen eines Kunststoffbehälters (2) aus einem Vorformling (3) in einer Hohlform (6) und zur Produktbefüllung des Kunststoffbehälters (2) in der Hohlform (6), mit einem Ventilkopf (11), der eine Reckstange (13) zum Strecken des Vorformlings (3) und ein Füllorgan (21) zum Abfüllen eines Produkts (24) in den Kunststoffbehälter (2) in der Hohlform (6) umfasst, dadurch gekennzeichnet, dass der Ventilkopf (11) zum Abfüllen eines Produkts (24) mit einem flüssigen oder pastösen Anteil (24a) und mit einem partikelartigen Anteil (24b), insbesondere Fruchtstücke, ausgebildet ist.

## Beschreibung

Die Erfindung betrifft eine Formfüllmaschine und ein Formfüllverfahren mit den Merkmalen der Oberbegriffe von Anspruch 1 bzw. 10.

Bekanntermaßen lassen sich Kunststoffbehälter im Streckblasverfahren aus Vorformlingen herstellen.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab.

Nachteilig dabei ist, dass die Qualität von Produkten mit einem flüssigen oder pastösen Anteil und einem partikelartigen Anteil beeinträchtigt werden kann.

Aufgabe der vorliegenden Erfindung ist es daher, eine Formfüllmaschine bereitzustellen, mit der eine Qualitätsminderung von derartigen Produkten beim Abfüllen in die Kunststoffbehälter vermieden wird.

Diese Aufgabe wird bei einer Formfüllmaschine mit den Merkmalen des Oberbegriffs von Anspruch 1 mit den Merkmalen des kennzeichnenden Teils gelöst, gemäß dem der Ventilkopf zum Abfüllen eines Produkts mit einem flüssigen oder pastösen Anteil und mit einem partikelartigen Anteil, insbesondere Fruchtstücke, ausgebildet ist.

Vorteilhafte Ausführungsformen der Erfindung sind in den Unteransprüchen definiert.

Dadurch, dass der Ventilkopf sowohl zum Abfüllen des flüssigen oder pastösen als auch des partikelartigen Produktanteils ausgebildet ist, können mit der Formfüllmaschine auch partikelartige Produktanteile, wie Fruchtstücke, ohne Quetschung in den Kanälen des Ventilkopfs bzw. ohne Druckbeschädigung in die Kunststoffbehälter abgefüllt werden. Folglich wird eine Qualitätsminderung des Produkts beim Abfüllen vermieden.

Die Formfüllmaschine kann in einer Getränkeverarbeitungsanlage angeordnet sein. Die Vorrichtung kann einem Vorratsbehälter für Vorformlinge, einem Rinser, einer Transporteinrichtung, einer Spritzgussmaschine zum Herstellen der Vorformlinge und/oder einem Ofen zum Erwärmen der Vorformlinge nachgeordnet sein. Die Vorrichtung kann einer Transporteinrichtung, einem Verschließer und/oder einer Verpackungsmaschine vorgeordnet sein.

Der Kunststoffbehälter kann dafür vorgesehen sein, Getränke, Hygieneartikel, Pasten, chemische, biologische und/oder pharmazeutische Produkte aufzunehmen. Der Kunststoffbehälter kann eine Kunststoffflasche, eine Dose und/oder eine Tube sein. Bei dem Kunststoffbehälter kann es sich im Speziellen um einen PET-, HD-PE- oder PP-Behälter bzw. -Flasche handeln. Der Vorformling kann dazu vorgesehen sein, durch Umformung in der Hohlform in den Kunststoffbehälter expandiert zu werden.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

Die Formfüllmaschine kann zum Transport von Kunststoffbehältern eine Transporteinrichtung umfassen. Die Transporteinrichtung kann ein Förderband oder Karussell sein. Das Karussell kann um eine vertikale Achse mittels eines Antriebs drehbar ausgebildet sein. "Vertikal" kann hier bedeuten, dass dies die Richtung ist, die auf den Erdmittelpunkt gerichtet ist. Die Transporteinrichtung kann Behälteraufnahmen zur Aufnahme der Kunststoffbehälter am Hals, am Behälterkörper und/oder Behälterboden umfassen. Ein Transportstern kann der Formfüllmaschine vorund/oder nachgeordnet sein.

Die Formfüllmaschine kann wenigstens eine Behandlungsstation zum expandierenden Umformen des Vorformlings zum Kunststoffbehälter in der Hohlform und zum Abfüllen des Produkts in den Kunststoffbehälter in der Hohlform umfassen. Die Formfüllmaschine kann mehrere Behandlungsstationen umfassen, die insbesondere mit den Behälteraufnahmen der Transporteinrichtung korrespondieren. Dadurch können mit der Formfüllmaschine mehrere Kunststoffbehälter parallel hergestellt und befüllt werden. Jede Behandlungsstation kann eine Hohlform und einen Ventilkopf umfassen. Die Behandlungsstationen können mit einem Drehverteiler zur Verteilung des Formfluids, des Produkts, eines Gases, eines Unter- und/oder Überdrucks verbunden sein. Die Behandlungsstationen können derart ausgebildet sein, dass die Vorformlinge in die Hohlform eingebracht, mit der Reckstange gestreckt, mit einem Formfluid zum Kunststoffbehälter ausgeformt, das Formfluid wieder abgesaugt und das Produkt in den Kunststoffbehälter abgefüllt wird. Das Formfluid kann Wasser oder eine geeignete inkompressible Flüssigkeit zur Behälterumformung sein. Ebenso ist denkbar, dass die Behandlungsstationen derart ausgebildet sind, dass der Vorformling in die Hohlform eingebracht, mit der Reckstange gestreckt und mittels des Produkts oder mit dem flüssigen oder pastösen Anteil zum Kunststoffbehälter ausgeformt wird.

Der Ventilkopf kann dazu ausgebildet sein, beim Ausformen und/oder beim Abfüllen des Produkts mit der Mündung des Vorformlings bzw. des Kunststoffbehälters zu korrespondieren. Ferner kann eine Verfahreinheit dazu vorgesehen sein, um nach dem Einbringen des Vorformlings die Hohlform mit dem Ventilkopf im Mündungsbereich zu verschließen. Ferner kann der Ventilkopf Ventile, Leitungen, Düsen, Weichen und dergleichen umfassen, um das Formfluid, ein Gas, das Produkt, den flüssigen oder pastösen Produktanteil, den partikelartigen Produktanteil und/oder weitere Produktanteile in den Vorformling und/oder den Kunststoffbehälter ein- oder auszuführen. Darüber hinaus kann der Ventilkopf zum Absaugen des Formfluids und/oder des Gases ausgebildet sein. Insbesondere kann der Ventilkopf dazu vorgesehen sein, einen Unter- und/oder Überdruck in den Vorformling bzw. den Kunststoffbehälter einzubringen. Ferner kann der Ventilkopf einen Kompressor umfassen oder mit diesem verbunden sein, um einen Druck auf das Formfluid und/oder das Gas aufzubringen. Der Kompressor kann beispielsweise ein Zylinder mit einem Kolben oder eine Pumpe umfassen. Darüber hinaus kann der Ventilkopf mit einer Vakuumpumpe verbunden sein. Die Ventile können dazu vorgesehen sein, den Fluss des Formfluids, des Produkts und/oder des Gases zu regulieren, freizugeben und/oder zu sperren.

Die Reckstange kann dazu vorgesehen sein, den Vorformling in einem erwärmten Zustand in der Hohlform zu strecken. Das Füllorgan kann wenigstens teilweise in der Reckstange integriert sein. Die Reckstange kann mit einer Längsverstellung oder über eine Kurvensteuerung entlang der Längsachse des Vorformlings verfahrbar sein.

Dass der Ventilkopf zum Abfüllen eines Produkts mit einem flüssigen oder pastösen Anteil und mit einem partikelartigen Anteil ausgebildet ist, kann hier bedeuten, dass die Kanäle für das Produkt oder wenigstens einen Anteil davon derart ausgelegt sind, dass der partikelartige Anteil beim Abfüllen nicht gequetscht wird.

Der flüssige oder pastöse Produktanteil kann ein flüssiges Lebensmittel, wie beispielsweise Saft, Bier, Wein, Milch, Tee, Kaffee oder dergleichen umfassen. Ebenso kann der flüssige oder pastöse Anteil einen Hygieneartikel, wie beispielsweise Parfum, Flüssigseife, Shampoo, Duschgel oder dergleichen umfassen. Der partikelartige Produktanteil kann Fruchtstücke, Körner (beispielsweise Samenkörner in einem Müsli), Geleestücke und/oder Fruchtanteile in einer Marmelade umfassen. Bei einem Hygieneartikel kann der partikelartige Anteil Seifenpartikel umfassen, die zur optischen Produktaufwertung eine andere Farbe aufweisen, als der flüssige oder pastöse Anteil.

Das Füllorgan kann derart ausgebildet sein, dass durch das Abfüllen des flüssigen oder pastösen Produktanteils ein Innendruck auf den Vorformling oder den mit der Reckstange gestreckten Vorformling derart aufbringbar ist, dass der Kunststoffbehälter in der Hohlform ausformbar ist. Dadurch kann der flüssige oder pastöse Produktanteil als Formfluid zum Ausformen des Kunststoffbehälters eingesetzt werden. Folglich muss das Formfluid nach dem Ausformen nicht mehr aus dem Kunststoffbehälter abgesaugt werden.

Das Füllorgan kann derart ausgebildet sein, dass der partikelartige Produktanteil nach dem Ausformen des Kunststoffbehälters darin abfüllbar ist. Dadurch wird der partikelartige Produktanteil beim Abfüllen nicht mit einem Überdruck beaufschlagt und so besonders schonend behandelt. Denkbar ist hier, dass zunächst der Vorformling oder der mit der Reckstange gestreckte Vorformling mittels des flüssigen oder pastösen Produktanteils in der Hohlform zum Kunststoffbehälter ausgeformt wird und anschließend der partikelartige Produktanteil abgefüllt wird.

Die Formfüllmaschine kann eine Absperreinrichtung zum wahlweisen Durchlassen oder Sperren wenigstens eines der Produktanteile umfassen, wobei die Absperreinrichtung insbesondere im Füllorgan und/oder in einer Produktzuführleitung des Füllorgans angeordnet ist. Dadurch ist es möglich, den partikelartigen Produktanteil zeitlich getrennt von dem flüssigen oder pastösen Produktanteil in den Kunststoffbehälter abzufüllen. Ebenso ist es möglich, durch die Absperreinrichtung den flüssigen oder pastösen Produktanteil zeitlich getrennt von einem Gemisch der beiden Produktanteile abzufüllen. Beispielsweise kann die Absperreinrichtung ein Rückhaltegitter oder -sieb umfassen, mit dem die partikelartigen Produktanteile im Füllorgan und/oder in der Produktzuführleitung rückhaltbar sind. Ebenso kann die Absperreinrichtung ein Ventil zum Freigegeben oder Sperren des flüssigen oder pastösen Produktanteils und/oder ein weiteres Ventil zum Freigeben oder Sperren des partikelartigen Produktanteils umfassen.

In der Reckstange kann wenigstens ein Kanal zum Abfüllen wenigstens eines Produktanteils oder des Produkts ausgebildet sein. Dadurch kann die Reckstange besonders effizient sowohl zum Strecken des Vorformlings als auch zum Abfüllen des wenigstens einen Produktanteils oder des Produkts eingesetzt werden. Ferner kann die Reckstange entlang der Längsachse des Kunststoffbehälters verstellbar ausgebildet sein, um den Vorformling zu strecken und/oder dem sich verändernden Flüssigkeitsspiegel beim Abfüllen des Produkts anzupassen.

Das Füllorgan kann mehrere separate Kanäle für unterschiedliche Produktanteile umfassen, insbesondere einen ersten Kanal für den flüssigen oder pastösen Produktanteil und einen zweiten Kanal für den partikelartigen Produktanteil. Dadurch können die Produktanteile voneinander getrennt gehalten werden, bis sie an den Kunststoffbehälter abgegeben werden. Folglich ist eine besonders genaue Dosierung der einzelnen Anteile möglich.

Wenigstens einer der separaten Kanäle kann in der Reckstange ausgebildet sein. Dadurch kann die Reckstange besonders effizient als Füllorgan eingesetzt werden und der entsprechende Produktanteil kann an der gewünschten Höhe in den Kunststoffbehälter abgegeben werden. An der Reckstange kann für jeden der separaten Kanäle wenigstens eine Austrittsöffnung zur Abgabe der Produktanteile in den Kunststoffbehälter ausgebildet sein. Ebenso ist denkbar, dass mehrere der separaten Kanäle in eine Austrittsöffnung an der Reckstange münden.

Die separaten Kanäle können um eine gemeinsame Achse konzentrisch ausgebildet sein und jeweils unterschiedliche Durchmesser aufweisen. Dadurch ist das Füllorgan besonders einfach aufgebaut. Beispielsweise können dadurch die flüssigen oder pastösen Produktanteile durch ein zentrales Rohr und die partikelartigen Produktanteile durch einen das zentrale Rohr umgebenden Ringkanal geführt werden. Eine umgekehrte Nutzung der Kanäle für die jeweiligen Anteile ist ebenfalls denkbar.

Wenigstens einer der separaten Kanäle kann für den partikelartigen Produktanteil ausgebildet sein, insbesondere mit einem Durchmesser in einem Bereich von 5 mm bis 20 mm, weiterhin insbesondere in einem Bereich von 8-12 mm. Vorzugsweise kann der Durchmesser größer sein als die maximale Größe der Partikel des partikelartigen Produktanteils. Dadurch wird eine Qualitätsbeeinträchtigung des partikelartigen Produktanteils durch ein Verklemmen im Kanal vermieden.

Darüber hinaus stellt Erfindung mit dem Anspruch 10 ein Formfüllverfahren für Kunststoffbehälter bereit, wobei ein Vorformling mit einer Reckstange eines Ventilkopfs in einer Hohlform gestreckt und mit einem Füllorgan des Ventilkopfs in der Hohlform befüllt und dabei zum Kunststoffbehälter ausgeformt wird, dadurch gekennzeichnet, dass mit dem Füllorgan ein flüssiger oder pastöser Produktanteil und ein partikelartiger Produktanteil, insbesondere Fruchtstücke, abgefüllt werden.

Dadurch, dass mit dem Füllorgan sowohl der flüssige oder pastöse Produktanteil als auch der partikelartige Produktanteil abgefüllt werden, werden die partikelartigen Produktanteile besonders schonend behandelt. Durch die Auslegung des Ventilkopfs werden eine Quetschung und eine Druckbeaufschlagung des partikelartigen Produktanteils, beispielsweise auf Fruchtstücke und eine daraus folgende Qualitätsminderung des Produkts vermieden.

Bei dem Formfüllverfahren kann der flüssige oder pastöse Produktanteil und der partikelartige Produktanteil jeweils durch separate Kanäle des Füllorgans abgefüllt werden, wobei wenigstens einer der Kanäle in der Reckstange ausgebildet ist. Dadurch kann der partikelartige Produktanteil besonders schonend und genau dosiert dem Kunststoffbehälter zugeführt werden. Darüber hinaus ist es auch möglich, die separaten Kanäle so auszulegen, dass der jeweilige Produktanteil besonders schonend gleichzeitig schnell abgefüllt wird.

Der flüssige oder pastöse Produktanteil und der partikelartige Produktanteil können mittels einer Absperreinrichtung wenigstens zeitweise nacheinander in den Kunststoffbehälter abgefüllt werden. Dadurch können die Produktanteile unabhängig voneinander dem Kunststoffbehälter zugeführt werden.

Der Vorformling oder der gestreckte Vorformling kann mit dem flüssigen oder pastösen Produktanteil zum Kunststoffbehälter umgeformt und anschließend kann der partikelartige Produktanteil in den Kunststoffbehälter abgefüllt werden. Dadurch wird der partikelartige Produktanteil nicht durch den Druck beim Ausformen des Kunststoffbehälters belastet. Folglich werden also empfindliche Produktanteile, wie beispielsweise Fruchtstücke, nicht durch einen äußeren Druck belastet und dadurch in der Qualität vermindert.

Darüber hinaus kann das Formfüllverfahren nach einem der Ansprüche 10-13 mit einer Formfüllmaschine nach einem der Ansprüche 1-9 durchgeführt werden. Ferner kann das Formfüllverfahren die zuvor in Bezug auf die Formfüllmaschine beschriebenen Merkmale einzelnen oder in beliebigen Kombinationen umfassen.

Weitere Merkmale und Vorteile der Erfindung werden nachfolgend anhand der in den Figuren dargestellten Ausführungsbeispiele näher erläutert. Dabei zeigt:
- Figur 1: ein Ausführungsbeispiel einer Formfüllmaschine mit mehreren Behandlungsstationen und einen vorgeordneten Ofen zur Erwärmung der Vorformling in einer Draufsicht;
- Figur 2: eine Behandlungsstation der in der Figur 1 dargestellten Formfüllmaschine in einer seitlichen Schnittansicht;
- Figur 3: die in der Figur 2 dargestellte Behandlungsstation beim Abfüllen eines Produkts mit flüssigen und partikelartigen Anteilen in einer seitlichen Ansicht; und
- Figur 4: eine alternative Ausführungsform der in der Figur 3 dargestellten Behandlungsstation in einer seitlichen Ansicht, bei der das Füllorgan separate Kanäle für die jeweiligen Produktanteile aufweist.

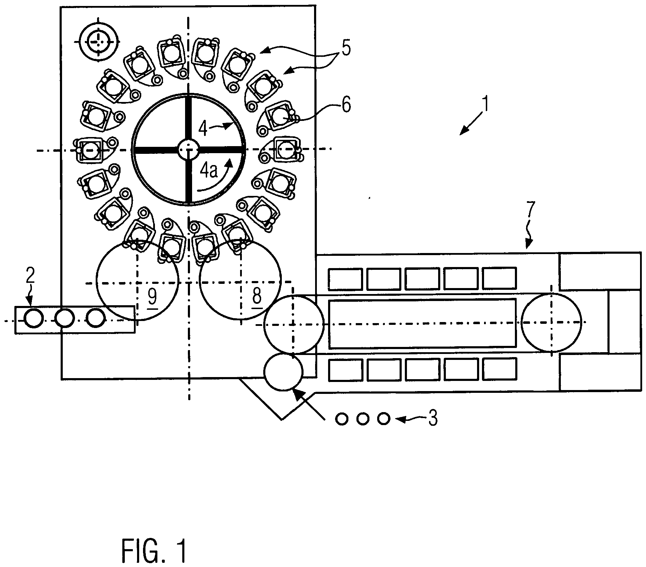

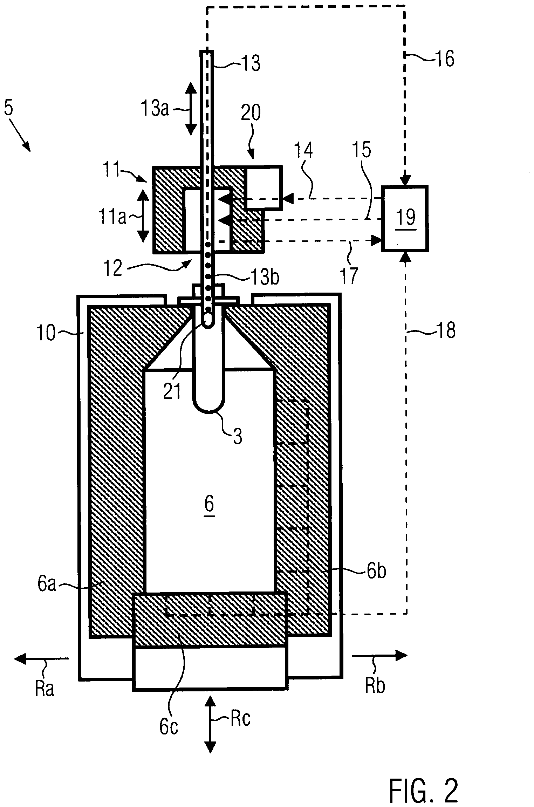

In der Figur 1 ist ein Ausführungsbeispiel einer Formfüllmaschine 1 mit einem vorgeschalteten Ofen 7 in einer Draufsicht dargestellt. Zu sehen sind die Vorformlinge 3, die zunächst den Ofen 7 durchlaufen und dadurch soweit erwärmt werden, dass sie mit der nachfolgenden Formfüllmaschine 1 in die gewünschte Behälterform umgeformt werden können. Anschließend werden die erwärmten Vorformlinge mit dem Einlaufstern 8 an die Behandlungsstationen 5 übergeben, die nachfolgend genauer anhand der Figuren 2 beschrieben werden. Beim Umlauf des Karussells 4 entlang der Richtung 4a werden die Vorformlinge 3 in den Behandlungsstationen 5 gestreckt, in die gewünschte Behälterform umgeformt und mit dem Produkt befüllt. Dabei verbleiben die Vorformlinge 3 bzw. die ausgeformten Behälter 2 immer in den Hohlformen 6. Nach dem Befüllen werden die Behälter 2 über den Auslaufstern 9 weiteren Behandlungsschritten zugeführt. Beispielsweise kann der Formfüllmaschine 1 ein Verschließer nach- oder zugeordnet sein, mit dem die Kunststoffbehälter 2 verschlossen werden. Die Kunststoffbehälter 2 sind hier PET-Behälter, können jedoch aus jedem anderen geeigneten Kunststoff sein.

In der Figur 2 ist eine Behandlungsstation 5 der in der Figur 1 dargestellten Formfüllmaschine 1 in einer seitlichen Schnittansicht gezeigt. Zu sehen ist, dass der Vorformling 3 bereits in die Hohlform 6 eingebracht ist. Im Bereich der Mündung weist der Vorformling 3 einen Kragen und ein hier nicht genauer dargestelltes Gewinde auf, das später zum Aufschrauben eines Verschlusses dient. Die einzelnen Formteile 6a-6c der Hohlform 6 sind über den mehrteiligen Formträger 10 in die Richtungen Ra, Rb, Rc verfahrbar, um den fertig ausgeformten Behälter nach dem Befüllen freizugeben. Denkbar ist auch, dass der Vorformling 3 entweder von oben in die Öffnung der Hohlform 6 gesteckt oder durch ein Öffnen und Schließen der Formteile 6a-6c in die Hohlform 6 eingebracht wird.

Zu sehen ist ferner der Ventilkopf 11 mit der Reckstange 13, die hier zusätzlich zur Streckfunktion als Füllorgan 21 ausgebildet ist. Ferner ist der Ventilkopf 11 mittels einer hier nicht dargestellten Verfahreinheit oder Kurvensteuerung in der Richtung 11a verfahrbar, um ihn auf die Hohlform 6 abzusenken und diese damit gegenüber der Umgebung beim Umformen und Befüllen abzuschließen. Denkbar ist, dass der Ventilkopf 11 Dichtungselemente zum Vorformling 3 und/oder zur Hohlform 6 aufweist.

Im Ventilkopf 11 ist die Reckstange 13 über eine hier ebenfalls nicht dargestellte Verfahreinheit oder Kurvensteuerung entlang der Richtung 13a verfahrbar, so dass der erwärmte Vorformling 3 in üblicher Weise gestreckt werden kann.

Ferner ist am Ventilkopf 11 die Fluiddüse 12 ausgebildet, mittels der ein Formfluid in den gestreckten Vorformling 3 eingepresst werden kann. Das Formfluid ist hier Wasser oder eine zur Umformung geeignete Flüssigkeit und wird über die Zuleitung 14 und den Kompressor 20 mit einem geeigneten Druck bereitgestellt. Dieser ist beispielsweise als Druckzylinder ausgeführt. Durch das Formfluid wird der gestreckte Vorformling 3 besonders schnell an die formgebenden Innenflächen der Hohlform 6 gepresst und so zum fertigen Kunststoffbehälter ausgeformt. Dabei nimmt das Formfluid gleichzeitig die Wärme des Vorformlings 3 auf, so dass der Behälter nach dem Umformen möglichst rasch seine Formstabilität erhält.

Nach dem Ausformen des Kunststoffbehälters wird das Formfluid über die Öffnungen 13b und einen Kanal in der Reckstange 13 in die hydraulische Absaugleitung 16 abgesaugt.

Beim Abfüllen wird das Produkt über die Produktzuleitung 15 und einen Kanal im Füllorgan 21 bzw. in der Reckstange 13 in den ausgeformten Kunststoffbehälter abgefüllt. Hierzu befindet sich am Füllorgan 21 bzw. an der Reckstange 13 eine entsprechende Abgabeöffnung. Beim Befüllen wird der Kunststoffbehälter über die pneumatischen Absaugleitungen 17, 18 am Ventilkopf 11 bzw. an der Hohlform 6 in einem Druckgleichgewicht zwischen der Innen- und Außenseite gehalten, so dass der Kunststoffbehälter nicht kollabiert. Vorteilhaft ist dabei eine Befüllung unter Unterdruck im Kunststoffbehälter.

Alternativ dazu ist denkbar, dass die Behandlungsstation 5 derart ausgebildet ist, dass das Produkt oder der flüssige oder pastöse Produktanteil als Formfluid zum Ausformen des Kunststoffbehälters eingesetzt wird. Dadurch muss das Formfluid dann nicht aus dem fertig ausgeformten Kunststoffbehälter wieder abgesaugt und durch das Produkt ersetzt werden.

Ferner ist der Medienverteiler 19 zu sehen, über den alle Behandlungsstationen 5 der Formfüllmaschine 1 mit dem Formfluid, dem Produkt und einem Unterdruck versorgt werden.

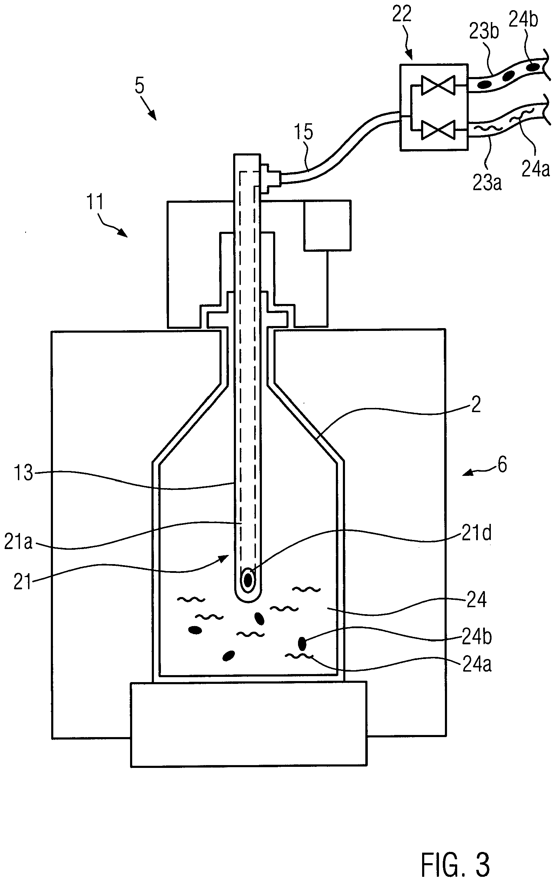

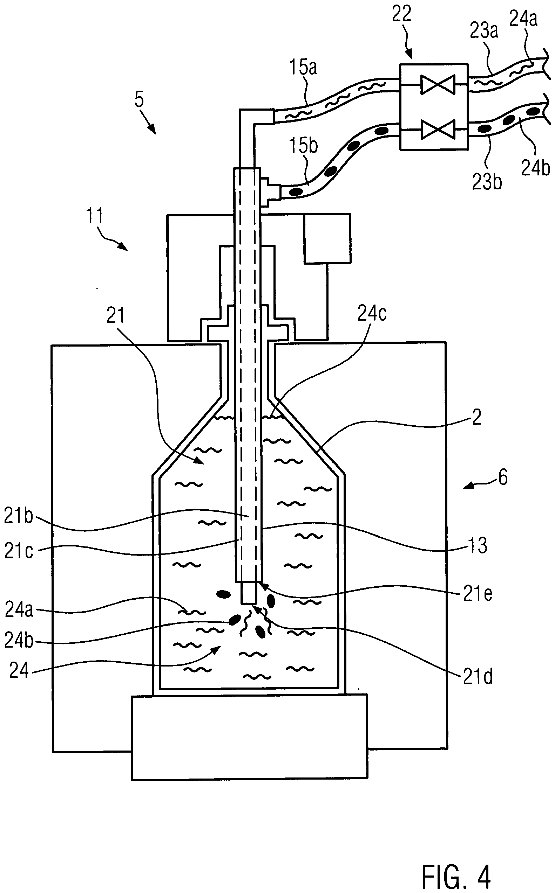

Der Ventilkopf 11 ist, wie nachfolgend genauer anhand der Figuren 3 und 4 beschrieben wird, besonders für ein Produkt mit einem flüssigen oder pastösen Anteil und einen partikelartigen Anteil ausgebildet.

In der Figur 3 ist die zuvor in der Figur 2 dargestellte Behandlungsstation 5 beim Abfüllen des Produkts 24 in einer seitlichen Ansicht gezeigt. Zu sehen ist, dass die Hohlform 6 noch zusammengefahren ist und darin der fertig ausgeformte Kunststoffbehälter 2 mit der als Füllorgan 21 ausgebildeten Reckstange 13 befüllt wird.

Damit die einzelnen Produktanteile 24a, 24b in der gewünschten Abfolge und/oder Menge an die Reckstange 13 zugeführt werden, ist in der Produktzuleitung 15 die Absperreinrichtung 22 vorgesehen. Durch entsprechende Ventile der Absperreinrichtung 22 ist wahlweise der flüssige Produktanteil 24a aus der Leitung 23a oder der partikelartige Produktanteil 24b aus der Leitung 23b oder eine beliebige Mischung daraus zuführbar. Weiterhin ist in der Reckstange der Kanal 21a ausgebildet, mit der die Produktanteile 24a, 24b durch die Öffnung 21 d in das Innere des Kunststoffbehälters 2 abgegeben werden. Dadurch ist es möglich, den flüssigen Anteil 24a, den partikelartigen Anteil 24b oder eine Mischung daraus in der gewünschten zeitlichen Abfolge in den Kunststoffbehälter 2 abzufüllen. Es ist denkbar, dass die Reckstange 13 beim Abfüllen entlang der Längsachse des Kunststoffbehälters 2 verfahren wird. Dadurch kann das Herausspritzen des flüssigen Anteils durch ein Hineinfallen des partikelartigen Anteils vermieden werden. Ebenso ist denkbar, dass die Reckstange 13 ein Rückgasrohr aufweist, durch das Gas oder Luft beim Füllen entweichen kann.

Alternativ ist mit der in Figur 3 dargestellten Behandlungsstation 5 denkbar, den Kunststoffbehälter 2 mit dem flüssigen Produktanteil 24a auszuformen und erst danach die partikelartigen Produktanteile 24b abzufüllen. Dadurch werden beispielsweise Fruchtstücke nicht mit Druck zum Ausformen beaufschlagt und dadurch schonend abgefüllt.

Der Kanal 21a in der Reckstange 13 ist hier im Durchmesser größer ausgebildet als die partikelartigen Produktanteile 24b. Dadurch werden diese bei der Förderung durch die Reckstange 13 nicht gequetscht. Beispielsweise beträgt der Durchmesser des Kanals 21 a 10 mm.

In der Figur 4 ist eine alternative Ausführung der Behandlungsstation 5 in einer seitlichen Ansicht dargestellt. Diese unterscheidet sich von der zuvor in den Figuren 2 - 3 dargestellten Ausführungsform lediglich dadurch, dass die als Füllorgan 21 ausgebildete Reckstange 13 und die Absperreinrichtung 22 getrennte Wege für den flüssigen Anteil 24a und den partikelartigen Anteil 20b aufweisen. Alle weiteren Merkmale entsprechen der in den Figuren 2-3 dargestellten Behandlungsstation 5.

Zu sehen ist, dass die Absperreinrichtung 22 nach den Ventilen den flüssigen Produktanteil 24a aus der Leitung 23a bzw. den partikelartigen Anteil 24b aus der Leitung 23b getrennt an die Produktleitungen 15a, 15b weiterleitet. Diese sind entsprechend mit den in der Reckstange 13 separat ausgebildeten Kanälen 21b und 21 c verbunden. Folglich fließt der flüssige Produktanteil 24a über die Produktleitung 15a in den zentral angeordneten Kanal 21 b und tritt am unteren Ende der Reckstange 13 durch die Öffnung 21 d in den Kunststoffbehälter 2 aus. Der partikelartige Produktanteil 24b gelangt dagegen durch die Produktleitung 15b in den konzentrisch zum Kanal 21 b ausgebildeten Kanal 21 c und tritt durch die Öffnung 21 e aus der Reckstange 13 in den Kunststoffbehälter 2 aus. Anders ausgedrückt bildet die Außenwand des zentralen Kanals 21b die Innenwand des Ringkanals 21c. Die beiden Wände des Ringkanals 21c sind dabei soweit beabstandet, dass die partikelartigen Produktanteile 24b nicht gequetscht werden. Beispielsweise ist der Abstand 10 mm. Dadurch ist es möglich, die verschiedenen Produktanteile 24a, 24b unabhängig voneinander bis in den Kunststoffbehälter 2 zu fördern und dadurch besonders schonend zu behandeln. Alternativ ist auch denkbar, dass der zentrale Kanal 21 b für die partikelartigen Produktanteile 24b und der Ringkanal 21c für die flüssigen oder pastösen Produktanteile vorgesehen ist.

Ferner ist zu sehen, dass beim Befüllen der partikelartigen Produktanteile 24b der Flüssigkeitsspiegel 24c bereits auf der endgültigen Abfüllhöhe liegt. Dadurch wird der partikelartige Anteil 24b nicht durch den Unterdruck beim schnellen Abfüllen des flüssigen Produktanteils 24a auseinandergezogen und das Produkt kann besonders schnell und trotzdem schonend abgefüllt werden.

Die zuvor in den Figuren 1-4 dargestellte Formfüllmaschine 1 bzw. die Behandlungsstationen 5 werden wie folgt eingesetzt:

Zunächst wird der Vorformling 3 mit der Reckstange 13 des Ventilkopfs 11 in der Hohlform 6 gestreckt und dann mit der Fluiddüse 12 oder dem Füllorgan 21 des Ventilkopfs 11 mit einem geeigneten Formfluid zum fertigen Kunststoffbehälter 2 ausgeformt. Zunächst wird das Formfluid abgesaugt und danach der Behälter 2 mit dem flüssigen Produktanteil 24a und dem partikelartigen Produktanteil 24b in der Hohlform 6 befüllt. Alternativ ist denkbar, dass der Kunststoffbehälter 2 mit dem flüssigen Produktanteil 24a als Formfluid ausgeformt und dann nur noch der partikelartige Produktanteil 24b zugegeben wird.

Mit der Formfüllmaschine 1 und dem beschriebenen Formfüllverfahren wird der partikelartige Produktanteil 24b durch geeignet dimensionierte Kanälen des Ventilkopfs 11 mit möglichst geringer Druckbeaufschlagung gefördert und damit möglichst qualitätsschonend in den Kunststoffbehälter 2 abgefüllt.

Es versteht sich, dass in den zuvor beschriebenen Ausführungsbeispielen genannte Merkmale nicht auf diese speziellen Kombinationen beschränkt und in beliebigen anderen Kombinationen möglich sind.

## Patentansprüche

1. Formfüllmaschine (1) zum Ausformen eines Kunststoffbehälters (2) aus einem Vorformling (3) in einer Hohlform (6) und zur Produktbefüllung des Kunststoffbehälters (2) in der Hohlform (6),
mit einem Ventilkopf (11), der eine Reckstange (13) zum Strecken des Vorformlings (3) und ein Füllorgan (21) zum Abfüllen eines Produkts (24) in den Kunststoffbehälter (2) in der Hohlform (6) umfasst,
**dadurch gekennzeichnet, dass**
der Ventilkopf (11) zum Abfüllen eines Produkts (24) mit einem flüssigen oder pastösen Anteil (24a) und mit einem partikelartigen Anteil (24b), insbesondere Fruchtstücke, ausgebildet ist.

2. Formfüllmaschine (1) nach Anspruch 1, wobei das Füllorgan (21) derart ausgebildet ist, dass durch das Abfüllen des flüssigen oder pastösen Produktanteils (24a) ein Innendruck auf den Vorformling (3) oder den mit der Reckstange (13) gestreckten Vorformling (3) derart aufbringbar ist, dass der Kunststoffbehälter (2) in der Hohlform (6) ausformbar ist.

3. Formfüllmaschine (1) nach Anspruch 1 oder 2, wobei das Füllorgan (21) derart ausgebildet ist, dass der partikelartige Produktanteil (24b) nach dem Ausformen des Kunststoffbehälters (2) darin abfüllbar ist.

4. Formfüllmaschine (1) nach einem der vorangegangenen Ansprüche, wobei die Formfüllmaschine (1) eine Absperreinrichtung (22) zum wahlweisen Durchlassen oder Sperren wenigstens eines der Produktanteile (24a, 24b) umfasst, wobei die Absperreinrichtung (22) insbesondere im Füllorgan (21) und/oder in einer Produktzuführleitung (15) des Füllorgans (21) angeordnet ist.

5. Formfüllmaschine (1) nach einem der vorangegangenen Ansprüche, wobei wenigstens ein Kanal (21a -21c) zum Abfüllen wenigstens eines Produktanteils (24a, 24b) oder des Produkts (24) in der Reckstange (13) ausgebildet ist.

6. Formfüllmaschine (1) nach einem der vorangegangenen Ansprüche, wobei das Füllorgan (21) mehrere separate Kanäle (21a -21c) für unterschiedliche Produktanteile (24a, 24b) umfasst, insbesondere einen ersten Kanal (21 b) für den flüssigen oder pastösen Produktanteil (24a) und einen zweiten Kanal (21 c) für den partikelartigen Produktanteil (24b).

7. Formfüllmaschine (1) nach Anspruch 6, wobei wenigstens einer der separaten Kanäle (21a -21c) in der Reckstange (13) ausgebildet ist.

8. Formfüllmaschine (1) nach Anspruch 6 oder 7, wobei die separaten Kanäle (21a - 21 c) um eine gemeinsame Achse konzentrisch ausgebildet sind und jeweils unterschiedliche Durchmesser aufweisen.

9. Formfüllmaschine (1) nach einem der Ansprüche 6 - 8, wobei wenigstens einer der separaten Kanäle (21 a, 21c) für die partikelartigen Produktanteile (24b) ausgebildet ist, insbesondere mit einem Durchmesser in einem Bereich von 5 mm bis 20 mm, weiterhin insbesondere in einem Bereich von 8 - 12 mm.

10. Formfüllverfahren für Kunststoffbehälter (2),
wobei ein Vorformling (3) mit einer Reckstange (13) eines Ventilkopfs (11) in einer Hohlform (6) gestreckt und
mit einem Füllorgan (21) des Ventilkopfs (11) in der Hohlform (6) befüllt und dabei zum Kunststoffbehälter (2) ausgeformt wird,
**dadurch gekennzeichnet, dass**
mit dem Füllorgan (21) ein flüssiger oder pastöser Produktanteil (24a) und ein partikelartiger Produktanteil (24b), insbesondere Fruchtstücke, abgefüllt werden.

11. Formfüllverfahren nach Anspruch 10, wobei der flüssige oder pastöse Produktanteil (24a) und der partikelartige Produktanteil (24b) jeweils durch separate Kanäle (21a -21c) des Füllorgans (21) abgefüllt werden, wobei wenigstens einer der Kanäle (21a -21c) in der Reckstange (13) ausgebildet ist.

12. Formfüllverfahren nach Anspruch 10 oder 11, wobei der flüssige oder pastöse Produktanteil (24a) und der partikelartige Produktanteil (24b) mittels einer Absperreinrichtung (22) wenigstens zweitweise nacheinander in den Kunststoffbehälter (2) abgefüllt werden.

13. Formfüllverfahren nach einem der Ansprüche 10 - 12, wobei der Vorformling (3) oder der gestreckte Vorformling mit dem flüssigen oder pastösen Produktanteil (24a) zum Kunststoffbehälter (2) umgeformt und anschließend der partikelartige Produktanteil (24b) in den Kunststoffbehälter (2) abgefüllt wird.
